# EUROPÄISCHE PATENTSCHRIFT

(11) **EP 3 097 375 B1**
(45) Veröffentlichungstag und Bekanntmachung des Hinweises auf die Patenterteilung: **12.09.2018**
(21) Anmeldenummer: 15721593.0
(22) Anmeldetag: 22.04.2015
(51) Int. Cl.: F28D 20/00

(54) **WÄRMESPEICHER**
HEAT ACCUMULATOR
ACCUMULATEUR DE CHALEUR

(30) Priorität: 06.05.2014 DE 102014208453
(43) Veröffentlichungstag der Anmeldung: 30.11.2016
(73) Patentinhaber: Siemens Aktiengesellschaft, 80333 München (DE)
(72) Erfinder: DANOV, Vladimir, 91056 Erlangen (DE); PAPADOPOULOS, Theodoros, 80333 München (DE)
(86) Internationale Anmeldenummer: PCT/EP2015/058732
(87) Internationale Veröffentlichungsnummer: WO 2015/169601

(56) Entgegenhaltungen:
- JP-A- S 591 995
- JP-A- S6 294 794
- JP-A- S57 202 492
- JP-A- 2012 136 940

## Beschreibung

Die Erfindung betrifft einen Wärmespeicher gemäß dem Oberbegriff des Patentanspruches 1. So ein Wärmespeicher ist aus JP S591995 A bekannt. Wärmespeicher sind thermische Energiespeicher, die thermische Energie (Wärme) speichern und somit eine Erzeugung von elektrischer Energie von einer Erzeugung oder Bereitstellung der thermischen Energie zeitlich entkoppeln. Die mittels des Wärmespeichers gespeicherte thermische Energie kann anschließend als Wärme direkt zum Verbraucher geführt oder wieder zur Erzeugung elektrischer Energie verwendet werden.

Ein möglicher Wärmespeicher ist ein Schüttgutspeicher, der als Schüttgut Steine oder Ziegel umfasst. Hierbei wird der Schüttgutspeicher typischerweise mittels eines etwa 600 °C warmen Fluids beladen.

Der Stand der Technik unterscheidet vertikal und horizontal ausgerichtete Wärmespeicher. Insbesondere bei einem horizontalen Wärmespeicher können beim Beladen oder Entladen Temperaturgradienten, das heißt Temperaturunterschiede, in verschiedenen Teilbereichen des horizontalen Wärmespeichers auftreten. Typischerweise entstehen die genannten unerwünschten Temperaturgradienten durch eine natürliche Konvektion innerhalb des horizontalen Wärmespeichers. Die genannten Temperaturgradienten sind nachteilig, da sie beim Beladen oder Entladen des horizontalen Wärmespeichers zu einer ungleichmäßigen Verteilung der Wärme führen. Hierdurch wird die Effizienz horizontaler Wärmespeicher eingeschränkt.

Nach dem Stand der Technik wird versucht, mittels horizontaler und/oder vertikaler Platten, die innerhalb des horizontalen Wärmespeichers angeordnet sind, die Temperaturgradienten auszugleichen oder zu verhindern, so dass sich eine annähernd gleichmäßige Verteilung der Temperatur, insbesondere beim Beladen und Entladen, innerhalb des horizontalen Wärmespeichers einstellt. Mittels der im horizontalen Wärmespeicher angeordneten horizontalen oder vertikalen Platten wird die natürliche Konvektion behindert, was folglich zu einer Homogenisierung der Temperaturverteilung innerhalb des horizontalen Wärmespeichers führt. Allerdings ist hierfür typischerweise eine hohe Anzahl von Platten notwendig. Bei vertikal angeordneten Platten werden zusätzlich die Druckverluste beim Beladen oder Entladen des horizontalen Wärmespeichers erhöht.

Ein weiterer Nachteil bekannter horizontaler Wärmespeicher ist, dass trotz der horizontal oder vertikal angeordneten Platten weiterhin Temperaturgradienten, die sich beispielsweise in Ruhephasen ausbilden, nicht verhindert werden können. Das ist deshalb der Fall, da sich ein warmes Fluid, mit welchem der horizontale Wärmespeicher beladen wird, an der Decke des horizontalen Wärmespeichers anordnet, während sich das kältere oder abgekühlte Fluid am Boden des horizontalen Wärmespeichers sammelt. Hieraus resultieren Temperaturgradienten, die mechanische Spannungen innerhalb des Wärmespeichermaterials zur Folge haben, so dass der horizontale Wärmespeicher nur ungenügend befüllt werden kann und folglich die Effizienz des horizontalen Wärmespeichers verringert wird.

Der vorliegenden Erfindung liegt die Aufgabe zugrunde, die Temperaturverteilung eines horizontalen Wärmespeichers zu verbessern.

Die Aufgabe wird durch einen Wärmespeicher mit den Merkmalen des unabhängigen Patentanspruches 1 gelöst. In den abhängigen Ansprüchen sind vorteilhafte Ausgestaltungen und Weiterbildungen der Erfindung angegeben.

Der erfindungsgemäße Wärmespeicher zur Speicherung thermischer Energie umfasst einen Behälter mit einer sich horizontal erstreckenden Längsachse, wobei der Behälter ein Wärmespeichermaterial umfasst. Durch die sich horizontal erstreckende Längsachse wird ein horizontal ausgerichteter beziehungsweise ein horizontaler Wärmespeicher ausgebildet. Zur Ein- und/oder Ausströmung eines Fluids ist erfindungsgemäß eine erste Öffnung und eine gegenüber der ersten Öffnung vertikal versetzte zweite Öffnung vorgesehen, wobei der Behälter wenigstens eine fluidundurchlässige Platte umfasst, die gegenüber einer Ein- und/oder Ausströmungsrichtung des Fluids geneigt ist.

Mit anderen Worten wird ein Fluid, das durch die erste oder zweite Öffnung in den Behälter des Wärmespeichers ein- oder ausströmt, mittels der gegenüber der Ein- und/oder Ausströmungsrichtung geneigten Platte umgelenkt. Die Strömungsrichtung des Fluids wird folglich gegenüber der Ein- und/oder Ausströmungsrichtung mittels der geneigten Platte geändert. Hierfür ist eine Anordnung der geneigten Platte in der Nähe der ersten oder zweiten Öffnung vorgesehen. Die geneigte Platte ist der Nähe der ersten/zweiten Öffnung angeordnet, wenn der Abstand der geneigten Platte zur ersten/zweiten Öffnung kleiner ist als der Abstand zur zweiten/ersten Öffnung.

Bevorzugt weist die geneigte Platte bezüglich der Ein- und/oder Ausströmungsrichtung des Fluids einen von Null verschiedenen spitzen Winkel auf, so dass stets eine Winkeländerung der Strömungsrichtung erfolgt. Insbesondere ist der spitze Winkel von 0° und 90° verschieden, so dass sich die geneigte Platte nicht vertikal und nicht horizontal erstreckt.

Vorteilhafterweise wird durch die geneigte Platte und der daraus erfolgenden Änderung der Strömungsrichtung des ein- oder ausströmenden Fluids eine Verteilung des Fluids innerhalb des Wärmespeichers oder des Behälters verbessert. Dadurch werden erfindungsgemäß Temperaturgradienten im Behälter und folglich innerhalb des Wärmespeichers verringert.

Bevorzugt ist die fluidundurchlässige geneigte Platte in der Nähe der ersten Öffnung und eine weitere fluidundurchlässige geneigte Platte in der Nähe der zweiten Öffnung angeordnet. Folglich umfasst der Behälter bevorzugt wenigstens zwei fluidundurchlässige geneigte Platten.

Beim Beladen des Wärmespeichers ist die fluidundurchlässige Platte in der Nähe der ersten Öffnung derart geneigt, dass das einströmende warme Fluid eine Änderung der Strömungsrichtung erfährt, die das warme Fluid zum Boden des Wärmespeichers ablenkt. Dadurch wird vorteilhafterweise eine natürliche Konvektion des Fluids zur Decke des Wärmespeichers beim Einströmen des Fluids verhindert.

Im Falle des Entladens des Wärmespeichers wird das einströmende kalte Fluid mittels der weiteren geneigten Platte in der Nähe der zweiten Öffnung in einen oberen Bereich, das heißt zur Decke des Wärmespeichers geleitet. Insgesamt werden dadurch Temperaturgradienten, die zwischen der Decke und dem Boden des Wärmespeichers entstehen könnten, ausgeglichen.

Durch den erfindungsgemäßen vertikalen Versatz der ersten und zweiten Öffnung werden Temperaturgradienten innerhalb des Wärmespeichers weiter verringert. Bevorzugt ist der vertikale Abstand der ersten Öffnung zur Decke des Behälters kleiner als der vertikale Abstand der zweiten Öffnung zur Decke des Behälters. Weiterhin ist ein kleinerer vertikaler Abstand der zweiten Öffnung zum Boden des Behälters gegenüber einem vertikalen Abstand der ersten Öffnung zum Boden des Behälters vorgesehen. Mit anderen Worten ist die erste Öffnung in der Nähe der Decke des Behälters und die zweite Öffnung in der Nähe des Bodens des Behälters angeordnet. Hierdurch weisen die erste und die zweite Öffnung den gegenseitigen vertikalen Versatz auf. Zweckmäßigerweise ist die Temperatur eines durch die erste Öffnung ein- oder ausströmenden Fluids größer als die Temperatur eines durch die zweite Öffnung ein- oder ausströmenden Fluids.

Bei dem Verfahren zum Betrieb eines erfindungsgemäßen Wärmespeichers wird ein Fluid mittels einer ersten oder einer gegenüber der ersten Öffnung vertikal versetzten zweiten Öffnung in einem Behälter des Wärmespeichers eingeströmt und in thermischen Kontakt mit einem Wärmespeichermaterial gebracht, wobei erfindungsgemäß zum Beladen des Wärmespeichers das Fluid durch die erste Öffnung eingeströmt und durch die zweite Öffnung ausgeströmt wird und/oder zum Entladen des Wärmespeichers das Fluid durch die zweite Öffnung eingeströmt und durch die erste Öffnung ausgeströmt wird.

Hierbei ist die erste Öffnung in der Nähe der Decke des Behälters und die zweite Öffnung in der Nähe des Bodens des Behälters angeordnet. Dadurch wird vorteilhafterweise beim Beladen des Wärmespeichers das durch die erste Öffnung einströmende Fluid mittels der geneigten Platte zum Boden des Behälters geleitet. Beim Beladen strömt das mittels der ersten Öffnung in den Behälter einströmende Fluid mittels der zweiten Öffnung aus den Behälter aus, wobei das Fluid vor dem Ausströmen, bevorzugt mittels der im Behälter angeordneten weiteren geneigten Platte, zur Decke des Behälters geleitet wird. Dadurch ergibt sich ein Strömungsverlauf des Fluids innerhalb des Behälters, der einer horizontal ausgerichteten S-Form gleicht. Hierdurch ergibt sich eine annähernd gleichmäßige Temperaturverteilung innerhalb Behälters.

Durch den thermischen Kontakt des Fluids mit dem Wärmespeichermaterial des Wärmespeichers wird beim Beladen des Wärmespeichers die Wärme vom Fluid auf das Wärmespeichermaterial übertragen. Beim Entladen wird die im Wärmespeicher beziehungsweise im Wärmespeichermaterial gespeicherte Wärme durch den thermischen Kontakt vom Wärmespeichermaterial auf das Fluid übertragen. Insbesondere weist das durch die erste Öffnung einströmende warme Fluid beim Beladen des Wärmespeichers eine größere Temperatur als das Wärmespeichermaterial auf. Beim Entladen des Wärmespeichers ist die Temperatur des Fluids kleiner als die Temperatur des Wärmespeichermaterials. Vorgesehen ist beim Einströmen des Fluids eine Temperatur des Fluids von annähernd 873,15 K (600 °C) und beim Ausströmen des Fluids eine Temperatur des Fluids von annähernd 453,15 K (180 °C).

Es ergeben sich zum bereits genannten erfindungsgemäßen Wärmespeicher gleichartige und gleichwertige Vorteile des erfindungsgemäßen Verfahrens.

Gemäß der Erfindung ist die geneigte Platte an einer Innenseite des Behälters, insbesondere am Boden oder an der Decke, angeordnet.

Vorteilhafterweise wird dadurch die Winkeländerung der Strömungsrichtung des ein- oder ausströmenden Fluids mittels der geneigten Platte weiter verbessert, da ein Durchströmen des Fluids an der Innenseite des Behälters, insbesondere an der Decke oder am Boden des Behälters, verhindert wird.

Besonders bevorzugt ist ein Wärmespeicher, dessen Behälter wenigstens eine fluiddurchlässige Verteilerplatte aufweist, wobei die fluiddurchlässige Verteilerplatte in Verbindung mit der fluidundurchlässigen Platte wenigstens einen ersten Teilbereich des Behälters von einem zweiten Teilbereich, welcher zweite Teilbereich das Wärmespeichermaterial umfasst, stofflich gegenüber dem Wärmespeichermaterial abgrenzt.

Vorteilhafterweise bildet sich hierdurch ein erster Teilbereich aus, in dem das Fluid zunächst mittels der geneigten Platte umgelenkt und mittels der fluiddurchlässigen Verteilerplatte im Wärmespeichermaterial verteilt wird. Hierbei erfolgt der Übergang des Fluids vom ersten Teilbereich in den das Wärmespeichermaterial umfassenden zweiten Teilbereich über die fluiddurchlässige Verteilerplatte. Mit anderen Worten wird die Ein- und/oder Ausströmung des Fluids im ersten Teilbereich nicht durch das Wärmespeichermaterial gestört. Bevorzugt ist hierbei eine Verteilerplatte, die einen hitzebeständigen Stahl umfasst.

Dadurch ist zweckmäßigerweise gewährleistet, dass die Verteilerplatte erforderliche thermische und mechanische Anforderungen, die sich durch die Anordnung der Verteilerplatte innerhalb des Behälters ergeben, erfüllt. Insbesondere ist für eine Verteilerplatte aus einem hitzebeständigen Stahl eine tragende Funktion, beispielsweise ein Tragen von im Behälter angeordneten Steinen, vorgesehen.

Von besonderem Vorteil ist eine Verteilerplatte, die ein Vlies umfasst.

Dadurch wird vorteilhafterweise die annähernd gleichmäßige Verteilung des Fluids innerhalb des Behälters weiter verbessert. Ein weiterer Vorteil des Vlieses ist, dass das Vlies sich der Formung und Gestaltung des Wärmespeichermaterials anpasst und folglich einer Verformung des Wärmespeichermaterials, beispielsweise durch eine thermische Belastung, folgen kann.

Bevorzugt kann eine Verteilerplatte sein, die ein Drahtgitter umfasst.

Hierbei besteht das Drahtgitter vorzugsweise aus Drähten, die aus einem hitzebeständigen Stahl gebildet sind.

Gemäß einer vorteilhaften Ausgestaltung der Erfindung wird das Wärmespeichermaterial aus einer Mehrzahl von steinartigen Elementen gebildet.

Besonders bevorzugt ist hierbei ein Wärmespeichermaterial, das Steine, Ziegelsteine und/oder ein keramisches Material umfasst.

Das ist deshalb von Vorteil, da Steine, Ziegelsteine und/oder keramische Materialien eine besonders hohe Wärmekapazität aufweisen, so dass ein besonders effizienter Wärmespeicher unter Verwendung der genannten Wärmespeichermaterialien ausgebildet wird.

Bevorzugt ist ein Wärmespeicher, dessen vertikale Ausdehnung senkrecht zu seiner Längsachse höchstens 10 m beträgt.

Mit anderen Worten bildet der Wärmespeicher einen horizontalen Wärmespeicher aus. Ein horizontaler Wärmespeicher besitzt gegenüber einem vertikalen Wärmespeicher den Vorteil, dass die geometrische Ausdehnung entlang der Längsachse, die beim vertikalen Speicher der Höhe des Speichers entspricht, im Wesentlichen keiner Einschränkung unterliegt. Zudem sind horizontale Wärmespeicher technisch weniger aufwendig als vertikale Wärmespeicher. Hierbei bezeichnet die Längsachse jene Achse des Wärmespeichers, die der Richtung seiner größten geometrischen Ausdehnung entspricht.

Gemäß einer zweckmäßigen Ausgestaltung der Erfindung weist eine erste Seite des Behälters die erste Öffnung und eine der ersten Seite gegenüberliegende zweite Seite des Behälters die zweite Öffnung auf.

Vorteilhafterweise wird dadurch annähernd der gesamte Wärmespeicher vom Fluid durchströmt. Hierdurch wird die Effizienz des Wärmespeichers verbessert.

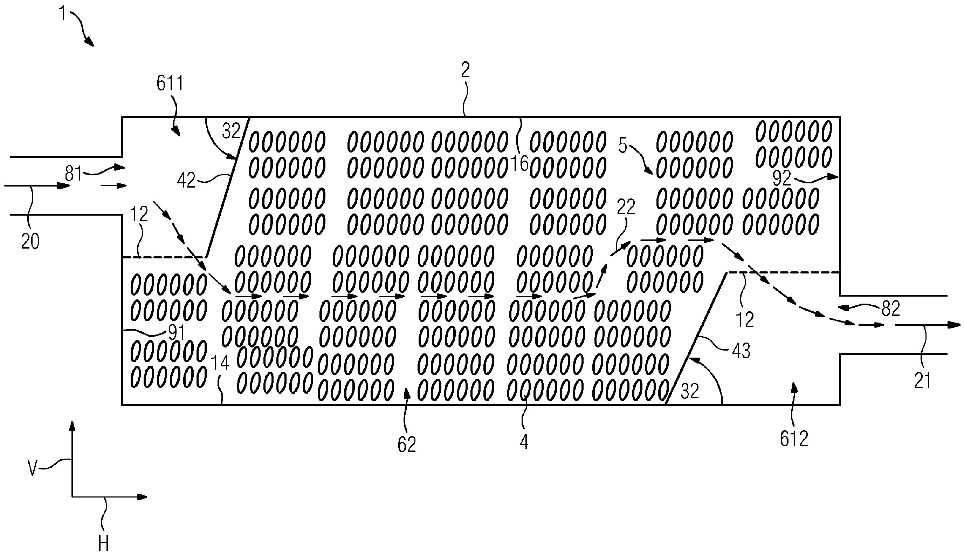

Weitere Vorteile, Merkmale und Einzelheiten der Erfindung ergeben sich aus dem im Folgenden beschriebenen Ausführungsbeispiel sowie anhand der Zeichnung. Dabei zeigt die einzige Figur einen Wärmespeicher mit zwei geneigten Platten.

Gleichartige Elemente können in der Figur mit denselben Bezugszeichen versehen sein.

Die einzige Figur zeigt einen Wärmespeicher 1, der einen Behälter 2 mit zwei geneigten Platten 42, 43 umfasst. Hierbei erstreckt sich der Behälter 2 entlang einer Längsachse, wobei die Längsachse im Wesentlichen parallel zu einer horizontalen Richtung H verläuft.

Die Begriffe horizontal und vertikal beziehen sich stets auf eine an dem Ort des Wärmespeichers 1 vorherrschende Schwerkraft (Lotrichtung).

Auf einer ersten Seite 91 weist der Behälter 2 eine erste Öffnung 81 auf. Hierbei ist die erste Öffnung 81 in einem oberen Bereich des Behälters 2 in der Nähe der Decke 16 angeordnet. Dadurch ist der vertikale Abstand der ersten Öffnung 81 zur Decke 16 kleiner als der vertikale Abstand der ersten Öffnung 81 zu einem Boden 14 des Behälters 2. Die Begriffe oben und unten beziehen sich auf eine vertikale Richtung V (Lotrichtung), wobei in vertikaler Richtung V nach einem unteren Ende (Boden 14) des Behälters 2 das obere Ende (Decke 16) des Behälters 2 folgt.

Eine der ersten Seite 91 gegenüberliegende zweite Seite 92 des Behälters 2 weist eine zweite Öffnung 82 auf, wobei die zweite Öffnung 82 sich im unteren Bereich des Behälters 2 in der Nähe des Bodens 14 befindet. Der vertikale Abstand der zweiten Öffnung 82 zum Boden 14 ist folglich kleiner als der vertikale Abstand der zweiten Öffnung 82 zur Decke 16 des Behälters 2. Mit anderen Worten weist die zweite Öffnung 82 einen vertikalen Versatz gegenüber der ersten Öffnung 81 auf.

An der Decke 16 ist die geneigte Platte 42 und am Boden 14 die weitere geneigte Platte 43 angeordnet, wobei jede der geneigten Platten 42, 43 einen von Null verschiedenen spitzen Winkel 32 zusammen mit der Decke 16 oder dem Boden 14 definiert oder ausbildet. Hierbei erstrecken sich die Platten 42, 43 annähernd parallel.

Weiterhin umfasst der Behälter 2 zwei Verteilerplatten 12, die sich annähernd parallel zur horizontalen Richtung H erstrecken und innerhalb des Behälters 2 jeweils mit der ersten oder zweiten Seite 91, 92 und jeweils mit einer der geneigten Platten 42, 43 einen ersten Teilbereich 611 und einen weiteren ersten Teilbereich 612 des Behälters 2 begrenzen.

Ein Wärmespeichermaterial 5 des Wärmespeichers 1 ist in einem zweiten Teilbereich 62 des Behälters 2 angeordnet. Hierbei umfasst das Wärmespeichermaterial 5 Steine 4. Innerhalb der ersten Teilbereiche 611, 612 ist kein Wärmespeichermaterial 5 angeordnet. Die zwei ersten Teilbereiche 611, 612 sind fluidisch offen mit der ersten oder zweiten Öffnung 81, 82 verbunden und bilden folglich einen Einlass- und/oder Auslassbereich 611, 612 für ein den Wärmespeicher 1 durchströmendes Fluid aus.

In den Behälter 2 wird zum Beladen des Wärmespeichers 1 ein warmes Fluid, das eine Einströmungsrichtung 20 aufweist, eingeströmt. Beispielsweise wird hierbei Luft als Fluid verwendet. Mittels der geneigten Platte 42, die in der Nähe der ersten Öffnung 81 angeordnet ist, wird die Strömungsrichtung 22 des Fluids gegenüber der Einströmungsrichtung 20 verändert, so dass das einströmende Fluid nach unten zum Boden 14 des Behälters 2 abgelenkt wird. Hierbei tritt das Fluid über die Verteilerplatte 12 in den zweiten Teilbereich 62 des Behälters 2 ein und befindet sich im thermischen Kontakt mit dem Wärmespeichermaterial 5. Nach Durchströmen des zweiten Teilbereiches 62 des Behälters 2 wird die Strömungsrichtung 22 des Fluids durch die weitere geneigte Platte 43, die in der Nähe der zweiten Öffnung 82 angeordnet ist, verändert, so dass das Fluid nach oben zur Decke 16 des Behälters 2 abgelenkt wird. Anschließend strömt das Fluid über eine weitere Verteilerplatte 12 in den weiteren ersten Teilbereich 612 des Behälters 2 ein und strömt aus der zweiten Öffnung 82 entlang einer Ausströmungsrichtung 21 aus dem Behälter 2 aus. Erfindungsgemäß wird mittels der Platte 42 das durch die erste Öffnung 81 einströmende warme Fluid nach unten zum Boden 16 des Behälters 2 geleitet, das heißt zur im Wärmespeicher 1 beziehungsweise im Behälter 2 vorherrschenden kalten Temperatur, so dass sich das im unteren Bereich angeordnete Wärmespeichermaterial 5 durch das eingeströmte oder eingeleitete warme Fluid erwärmt. Durch die Erwärmung des Wärmespeichermaterials 5 kühlt das Fluid ab und strömt durch die zweite Öffnung 82 entlang der Ausströmungseinrichtung 21 aus dem Behälter 2 aus. Hierbei wird das Fluid vor dem Ausströmen mittels der weiteren geneigten Platte 43 zur Decke 2 des Behälters geleitet. Erfindungsgemäß wird somit durch die geneigten Platten 42, 43 die Strömung des Fluids durch das im Behälter 2 angeordnete Wärmespeichermaterial 5 verbessert. Dadurch werden Temperaturgradienten innerhalb des Behälters 2 oder innerhalb des Wärmespeichermaterials 5 verringert oder vermieden.

Beim Entladen des Wärmespeichers 1 dient die zweite Öffnung 82 als Eingang und die erste Öffnung 20 als Ausgang für das Fluid, so dass sich die Strömungsrichtung beim Entladen des Wärmespeichers 1 gegenüber der Strömungsrichtung 22 beim Beladen des Wärmespeichers 1 umkehrt. Jedoch bleibt der erfindungsgemäße Vorteil der verbesserten Verteilung des Fluids innerhalb des Behälters 2 und der hieraus resultierenden verbesserten Temperaturverteilung auch beim Entladen bestehen.

Es wird folglich erfindungsgemäß die Strömungsrichtung 22 des Fluids mittels der geneigten Platten 42, 43 stets so verändert und angepasst, dass das warme Fluid in einen kalten Teilbereich des Behälters 2 oder das kalte Fluid in einen warmen Teilbereich des Behälters 2 eingeströmt oder geleitet wird. Dadurch wird die Strömungsrichtung 22 des Fluids der Temperaturverteilung innerhalb des Wärmespeichers 1 vorteilhaft angepasst.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

## Patentansprüche

1. Wärmespeicher (1) zur Speicherung thermischer Energie, umfassend einen Behälter (2) mit einem Boden (14), einer Decke (16) und einer sich horizontal erstreckenden Längsachse, wobei der Behälter (2) ein Wärmespeichermaterial (5) umfasst und zur Ein- und/oder Ausströmung eines Fluids eine erste Öffnung (81) und eine gegenüber der ersten Öffnung (81) vertikal versetzte zweite Öffnung (82) vorgesehen ist, wobei der Behälter (2) eine erste und zweite fluidundurchlässige Platte (42, 43) umfasst, die gegenüber einer Ein- und/oder Ausströmungsrichtung (20, 21) des Fluids geneigt und an einer Innenseite des Behälters (2) angeordnet sind,
**dadurch gekennzeichnet, dass**
die erste Platte (42) an der Decke (16) und die zweite Platte (14) am Boden (16) angeordnet ist, wobei die erste Platte (2) einen von Null verschiedenen spitzen Winkel (32) mit der Decke (16) und die zweite Platte (43) den spitzen Winkel (32) mit dem Boden (14) ausbildet.

2. Wärmespeicher (1) gemäß Anspruch 1, **dadurch gekennzeichnet, dass** wenigstens eine der Platten (42, 43) gegenüber der Ein- und/oder Ausströmungsrichtung (20, 21) einen von Null verschiedenen spitzen Winkel (32) aufweist.

3. Wärmespeicher (1) gemäß Anspruch 1 oder 2, **dadurch gekennzeichnet, dass** der Behälter (2) wenigstens eine fluiddurchlässige Verteilerplatte (12) aufweist, wobei die fluiddurchlässige Verteilerplatte (12) in Verbindung mit einer der fluidundurchlässigen Platten (42, 43) wenigstens einen ersten Teilbereich (611, 612) des Behälters (2) von einem zweiten Teilbereich (62), welcher zweite Teilbereich (62) das Wärmespeichermaterial (5) umfasst, stofflich gegenüber dem Wärmespeichermaterial (5) abgrenzt.

4. Wärmespeicher (1) gemäß Anspruch 3, **dadurch gekennzeichnet, dass** die Verteilerplatte (12) einen hitzebeständigen Stahl umfasst.

5. Wärmespeicher (1) gemäß Anspruch 3 oder 4, **dadurch gekennzeichnet, dass** die Verteilerplatte (12) ein Vlies umfasst.

6. Wärmespeicher (1) gemäß einem der Ansprüche 3 bis 5, **dadurch gekennzeichnet, dass** die Verteilerplatte (12) ein Drahtgitter umfasst.

7. Wärmespeicher (1) gemäß einem der vorangegangen Ansprüche, **dadurch gekennzeichnet, dass** das Wärmespeichermaterial (5) aus einer Mehrzahl von steinartigen Elementen (4) gebildet ist.

8. Wärmespeicher (1) gemäß Anspruch 7, **dadurch gekennzeichnet, dass** das Wärmespeichermaterial (5) Steine, Ziegelsteine und/oder ein keramisches Material umfasst.

9. Wärmespeicher (1) gemäß einem der vorangegangen Ansprüche, **dadurch gekennzeichnet, dass** eine vertikale Ausdehnung des Wärmespeichers (1) senkrecht zur Längsachse höchstens 10 m ist.

10. Wärmespeicher (1) gemäß einem der vorangegangen Ansprüche, **dadurch gekennzeichnet, dass** eine erste Seite (91) des Behälters (2) die erste Öffnung (81) und eine der ersten Seite (91) gegenüberliegende zweite Seite (92) des Behälters (2) die zweite Öffnung (82) aufweist.

## Claims

1. Heat store (1) for storing thermal energy, comprising a container (2) with a base (14), a cover (16) and a horizontally extending longitudinal axis, wherein the container (2) comprises a heat store material (5), and, for the inflow and/or outflow of a fluid, provision is made of a first opening (81) and a second opening (82) offset vertically with respect to the first opening (81), wherein the container (2) comprises a first and second fluid-impermeable plate (42, 43), which are inclined with respect to an inflow and/or outflow direction (20, 21) of the fluid and are arranged on an inner side of the container (2),
**characterized in that**
the first plate (42) is arranged on the cover (16) and the second plate (14) is arranged on the base (16), wherein the first plate (2) forms a non-zero acute angle (32) with the cover (16) and the second plate (43) forms the acute angle (32) with the base (14).

2. Heat store (1) according to Claim 1, **characterized in that** at least one of the plates (42, 43) is at a non-zero acute angle (32) with respect to the inflow and/or outflow direction (20, 21).

3. Heat store (1) according to Claim 1 or 2, **characterized in that** the container (2) has at least one fluid-permeable distributor plate (12), wherein the fluid-permeable distributor plate (12), in conjunction with one of the fluid-impermeable plates (42, 43), materially delimits, with respect to the heat store material (5), at least a first partial region (611, 612) of the container (2) from a second partial region (62), which second partial region (62) comprises the heat store material (5).

4. Heat store (1) according to Claim 3, **characterized in that** the distributor plate (12) comprises a heat-resistant steel.

5. Heat store (1) according to Claim 3 or 4, **characterized in that** the distributor plate (12) comprises a nonwoven.

6. Heat store (1) according to one of Claims 3 to 5, **characterized in that** the distributor plate (12) comprises a wire grid.

7. Heat store (1) according to one of the preceding claims, **characterized in that** the heat store material (5) is formed from a plurality of stone-like elements (4).

8. Heat store (1) according to Claim 7, **characterized in that** the heat store material (5) comprises stones, bricks and/or a ceramic material.

9. Heat store (1) according to one of the preceding claims, **characterized in that** a vertical extent of the heat store (1) perpendicular to the longitudinal axis is at most 10 m.

10. Heat store (1) according to one of the preceding claims, **characterized in that** a first side (91) of the container (2) has the first opening (81) and a second side (92) of the container (2) lying opposite the first side (91) has the second opening (82).

## Revendications

1. Accumulateur (1) de chaleur pour accumuler de l'énergie thermique, comprenant un récipient (2) ayant un fond (14), une couverture (16) et un axe longitudinal s'étendant horizontalement, le récipient (2) comprenant un matériau (5) d'accumulateur de chaleur et il est prévu, pour l'entrée et/ou la sortie d'un fluide, une première ouverture (81) et une deuxième ouverture (82) décalée verticalement par rapport à la première ouverture (81), le récipient (2) comprenant une première et une deuxième plaques (42, 43) imperméables au fluide, qui sont inclinées par rapport à une direction (20, 21) d'entrée et/ou de sortie du fluide et qui sont disposées d'un côté intérieur du récipient (2),
**caractérisé en ce que**
la première plaque (42) est disposée sur la couverture (16) et la deuxième plaque (14) sur le fond (16), la première plaque (2) faisant, avec la couverture (16), un angle (32) aigu différent de zéro et la deuxième plaque (43), avec le fond (14), l'angle (32) aigu.

2. Accumulateur (1) de chaleur suivant la revendication 1, **caractérisé en ce qu'**au moins l'une des plaques (42, 43) fait, avec la direction (20, 21) d'entrée et/ou de sortie, un angle (32) aigu différent de zéro.

3. Accumulateur (1) de chaleur suivant la revendication 1 ou 2, **caractérisé en ce que** le récipient (2) a au moins une plaque (12) formant répartiteur perméable au fluide, la plaque (12) formant répartiteur perméable au fluide délimitant matériellement, par rapport au matériau (5) d'accumulateur de chaleur en liaison avec l'une des plaques (42, 43) imperméables au fluide, au moins une première sous-région (611, 612) du récipient (12), laquelle deuxième sous-région (62) comprend le matériau (5) d'accumulateur de chaleur.

4. Accumulateur (1) de chaleur suivant la revendication 3, **caractérisé en ce que** la plaque (12) formant répartiteur comprend de l'acier résistant à la chaleur.

5. Accumulateur (1) de chaleur suivant la revendication 3 ou 4, **caractérisé en ce que** la plaque (12) formant répartiteur comprend un non-tissé.

6. Accumulateur (1) de chaleur suivant l'une des revendications 3 à 5, **caractérisé en ce que** la plaque (12) formant répartiteur comprend un grillage de film métallique.

7. Accumulateur (1) de chaleur suivant l'une des revendications précédentes, **caractérisé en ce que** le matériau (5) d'accumulateur de chaleur est formé d'une pluralité d'éléments (4) de type roche.

8. Accumulateur (1) de chaleur suivant la revendication 7, **caractérisé en ce que** le matériau (5) d'accumulateur de chaleur comprend des roches, des briques et/ou un matériau céramique.

9. Accumulateur (1) de chaleur suivant l'une des revendications précédentes, **caractérisé en ce qu'**une étendue verticale de l'accumulateur (1) de chaleur perpendiculairement à l'axe longitudinal est au plus de 10 m.

10. Accumulateur (1) de chaleur suivant l'une des revendications précédentes, **caractérisé en ce qu'**un premier côté (91) du récipient (2) a la première ouverture (81) et un deuxième côté (92), opposé au premier côté (91) du récipient (2), a la deuxième ouverture (82).
